# EUROPEAN PATENT SPECIFICATION

(11) **EP 2 953 767 B1**
(45) Date of publication and mention of the grant of the patent: **15.01.2020**
(21) Application number: 13705522.4
(22) Date of filing: 05.02.2013
(51) Int. Cl.: B25B 29/02, B23P 19/06

(54) **PRETENSIONING TOOL, PRETENSIONING SYSTEM AND A METHOD FOR PRETENSIONING BOLTS**
VORSPANNWERKZEUG, VORSPANNSYSTEM UND VERFAHREN ZUM VORSPANNEN VON BOLZEN
OUTIL DE PRÉCONTRAINTE, SYSTÈME DE PRÉCONTRAINTE ET PROCÉDÉ PERMETTANT DE PRÉCONTRAINDRE DES BOULONS

(43) Date of publication of application: 16.12.2015
(73) Proprietor: Wärtsilä Finland Oy, 65100 Vaasa (FI)
(72) Inventor: MÄENPÄÄ, Juho, FI-66450 Jakkula (FI); MALLY, Peter, 88097 Eriskirch (DE)
(74) Representative: Berggren Oy, Helsinki & Oulu
(86) International application number: PCT/FI2013/050123
(87) International publication number: WO 2014/122356

(56) References cited:
- EP-A1- 2 522 465
- WO-A1-2011/120589
- DE-A1- 4 324 888

## Description

### TECHNICAL FIELD

The invention is related to the pretensioning of bolts in the course of assembling machinery and structures. Especially the invention is related to the task of identifying the tools used for pretensioning, as well as the task of logging the use of such tools.

### BACKGROUND OF THE INVENTION

The well-established method of tightening bolts in important structures and pieces of machinery, where accurate control of the tensioning force is desired, involves using a pretensioning tool to elastically stretch the bolt prior to tightening the nut. A typical pretensioning tool comprises gripping means for gripping the free end of the bolt, and one or more hydraulic cylinders. Hydraulic fluid pumped into the cylinder(s) at high pressure moves the gripping means, which in turn stretches the bolt.

The bolts that are to be pretensioned may be located in cramped spaces to which there is limited access, like the bolts that hold together the big ends of connecting rods in an internal combustion engine for example. Additionally or alternatively they may be located in places to which all tools must be carried over long distance, like the bolts used to assemble the structures of wind turbines for example. Together with the overall desire for easy and practical use, this advocates making the pretensioning tool as small and lightweight as possible. On the other hand, the pretensioning tool must withstand very high mechanical loads, for example due to the high pressure of the hydraulic fluid, which may easily be thousands of bars. The number of operating cycles experienced by each pretensioning tool should be monitored, and a predetermined maximum number of cycles should not be exceeded.

The traditional solution has been to make the operator manually maintain a log, in which the use of pretensioning tools was documented. In such an arrangement the serial number or other identifier, which constituted the basis for maintaining the operating log, was printed or otherwise visually perceptible on the pretensioning tool. A more recent development involved printing the identifier on the pretensioning tool in the form of a barcode or in some other machine-readable form, which makes its reading faster and helps to avoid human errors in maintaining the log. However, there remains the possibility of confusion and error: for example the operator may inadvertently read the identifier of another tool.

Another known approach has been to build a mechanical counter within the pretensioning tool itself. Drawbacks of such an approach involve the added complexity and weight of the pretensioning tool, as well as the possibility of malfunction of the counter.

Patent application WO 2011/120589 A1 discloses a multiple stud tensioner machine. The machine comprises a plurality of elongation sensors. Each of the sensors can be provided with individual wireless communication means for transmitting measurement and identification signals to a computer system. The computer system can thus monitor the tensioning operation of several studs simultaneously.

### SUMMARY OF THE INVENTION

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

The present invention aims at an improved solution for maintaining an operation log of pretensioning tools. Another objective of the invention is to provide a method and an arrangement for monitoring the use of pretensioning tools so that the possibility of human error is minimal. Yet another objective of the invention is to achieve synergetic advantages by combining the use of an operation log with other operating features of a pretensioning system. A further objective of the invention is to provide simple and robust structural and functional solutions in a pretensioning system.

According to an aspect of the invention, a bus connection is provided to a sensor in the pretensioning tool that monitors its operation. A bus address or a corresponding identifier of the sensor is used to automatically identify the pretensioning tool.

A pretensioning system according to the invention is characterized by the features recited in the characterizing part of the independent claim directed to a pretensioning system.

A method and a computer program product according to the invention are characterized by the features recited in the characterizing parts of the respective independent claims.

Connecting a sensor in the pretensioning tool to a bus, instead of using dedicated wires for each sensor and each signal, simplifies the wiring especially in a system where a number of pretensioning tools may be used together with a common central unit. For communications over the bus the sensor(s) may be identified with a bus address or a corresponding identifier. Using the same identifier to identify the pretensioning tool proper provides a simple and reliable way of associating the actually occurred operating cycles and other important parameters with correct pretensioning tool. It also enables many automatic monitoring and control functions that were not possible in prior art systems.

A number of exemplifying embodiments of the invention are described in accompanied dependent claims.

Various non-limiting exemplifying embodiments of the invention both as to constructions and to methods of operation, together with additional objects and advantages thereof, will be best understood from the following description of specific exemplifying embodiments when read in connection with the accompanying drawings.

The verb "to comprise" is used in this document as an open limitation that neither excludes nor requires the existence of unrecited features. The features recited in depending claims are mutually freely combinable unless otherwise explicitly stated.

### BRIEF DESCRIPTION OF DRAWINGS

- Fig. 1: illustrates a pretensioning tool,
- fig. 2: illustrates a pretensioning system,
- fig. 3: illustrates logical entities and connections of a system,
- fig. 4: illustrates logical entities and connections of another system,
- fig. 5: illustrates functional entities of a system, and
- fig. 6: illustrates a method and a computer program product.

### DESCRIPTION OF EXEMPLIFYING EMBODIMENTS

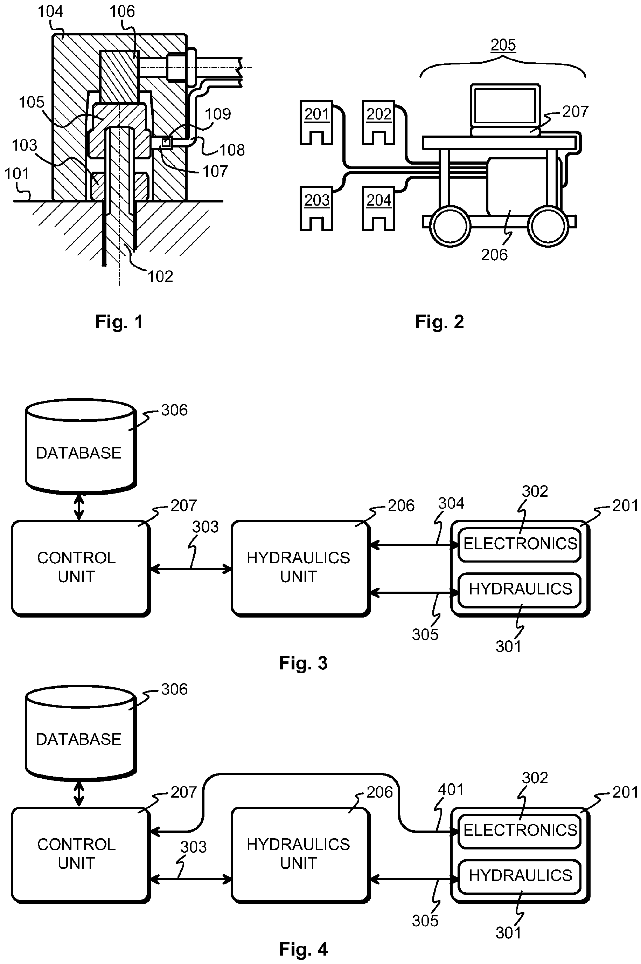

Fig. 1 is a partial cross section that illustrates schematically a pretensioning tool for bolts. A surface 101 defines a hole, through which comes the free end of a bolt 102. The purpose is to tighten a nut 103 so that it will exert a compressive force of a predetermined magnitude against the surface 101. The pretensioning tool comprises a body 104 that can be supported against the surface 101, and a gripper 105 for gripping the free end of the bolt 102 to be pretensioned. The pretensioning tool comprises also at least one hydraulic cylinder 106, the piston of which (not separately shown) is connected to the gripper 105 for exerting a drawing force in the axial direction to the bolt 102, causing it to extend elastically. When the elastic extension of the bolt has reached a predetermined value, the nut 103 is wound into place against the surface 101. After that the drawing force can be released, and the bolted connection remains at the desired tightness.

The pretensioning tool of fig. 1 comprises a sensor 107 for measuring tension created during operation. Various ways of placing the sensor in the pretensioning tool, as well as various principles of measuring the actual tension, are possible. The schematically illustrated structure of fig. 1 assumes that the measuring principle follows that disclosed in the patent application number Fl 20125142, which at the time of writing this description is not yet available to the public. In other words, the sensor 107 is a magnetic sensor configured to measure the movements of magnetic material (not separately shown) comprised in the gripper 105. Other possibilities include, but are not limited to, placing a sensor so that it measures the movements of the piston in the hydraulic cylinder 106, using a pressure gauge to measure the pressure of the hydraulic fluid in the cylinder, or equipping some part of the pretensioning tool with a strain gauge that measures the elastic deformations taking place in that part of the tool as a function of the increasing drawing force.

The measurement data produced by the sensor 107 must be brought out to the other parts of the system in order to be of use, for which purpose the pretensioning tool comprises a connection 108 for electronic communication with the sensor 107. According to an aspect of the present invention, the connection 108 is a bus connection.

The word bus is used here to mean a digital multipoint communications system, or a communications system in which a number of digitally communicating devices share the same physical medium for conveying the physical phenomena (current, voltage, and/or electromagnetic fields) that carry the information content of the communications. The number of communicating devices that take part in the communications over the bus is two or more; an important feature of a bus is that it enables (but does not require) there to be three or more devices that share the same physical transmission medium, even if each individual piece of communications conveyed on the bus is always meant from a single transmitting device to a single receiving device. A bus connection is typically a wired connection, although many of the same principles apply also to wireless communications, in which all communicating devices share the same space through which the wireless transmissions propagate. The present invention does not exclude the bus connection from being a wireless connection.

A bus connection includes a physical part and a logical part, both of which must obey the definitions characteristic to the bus. The physical part comprises the wires (or, in the case of a wireless connection, the antenna(s)) and connectors, as well as the circuits needed to establish the necessary currents, voltages, and/or electromagnetic fields. The logical part of the bus connection comprises the functional circuits that arrange the timing, message composition and decomposition, as well as device identification aspects. Each device that communicates over the bus has one or more bus addresses at its disposal. The bus addresses are used to direct the communications that are conveyed over the bus so that the information content of a transmission may be shown to originate from a particular transmitting device, and/or dedicated for the reception and use of a particular receiving device.

In particular, we may assume that an identifier has been allocated to the sensor 107. The identifier is unique in the context of the pretensioning system, which means that only one sensor of only one pretensioning tool has this identifier. The pretensioning tool comprises an address circuit 109 that is configured to utilize the identifier of the sensor 107 when communicating through the bus connection 108. Utilizing the identifier means at least one of: using the identifier to recognize messages received through the bus connection as being directed to the sensor of this pretensioning tool, and/or making transmissions made through the bus connection manifest the identifier of the sensor of this pretensioning tool. Concerning the former, the address circuit may for example compare the contents of an address field in a received digital message to the identifier it has at its disposal. Concerning transmission, the address circuit may for example compose a message for transmission so that an address field in the message contains a copy of the identifier.

Fig. 1 shows schematically a solution in which the address circuit 109 constitutes an integral entity with the sensor 107. In an alternative solution the address circuit may be located separately from the sensor in the pretensioning tool. For example, the pretensioning tool may comprise an electronic control unit, of which the address circuit is a part. Examples of known bus standards that can be used to define the bus connection are RS-485, CAN, and RS-232. The acronym RS comes from Recommended Standard, and the acronym CAN comes from Controller Area Network. The RS-232 is a relatively extensive serial bus standard, of which simpler versions known as the reduced RS-232 are known. Variants of reduced RS-232 are three-wire- and five-wire RS-232.

Fig. 2 illustrates schematically a pretensioning system, which comprises at least one pretensioning tool - in the embodiment of fig. 2 there are four pretensioning tools 201, 202, 203, and 204. Additionally the system comprises a central unit 205, which in the embodiment of fig. 2 is a mobile unit built on wheels. The different pretensioning tools 201, 202, 203, and 204 may be connected to the central unit 205 simultaneously, as in fig. 2, or one or more of them may be connected to the central unit 205 in turn.

Parts of the central unit 205 in fig. 2 are a hydraulics unit 206 and a control unit 207, of which the former is essentially a controllable hydraulic pump capable of producing pressures in the range of thousands of bars, and the latter is a computer. The connections between the pretensioning tools and the central unit comprise both the high-pressure hydraulic hoses needed to convey the hydraulic fluid and the electric connections needed to establish the bus that conveys the sensor readings.

Fig. 3 illustrates one possibility of arranging the connections between the logical entities of a pretensioning system. One pretensioning tool 201 is shown to separately comprise a hydraulics part 301 and an electronics part 302. The connection 303 between the control unit 207 and the hydraulics unit 206 is the so-called operating communications connection, through which the control unit 207 sends operating commands to the hydraulics unit 206 and receives measurement data. Between the hydraulics unit 206 and the electronics part 302 of the pretensioning tool the bus 304 constitutes the electronic part of the connection. The hydraulic part 305 of the connection is shown separately. The arrangement of fig. 3 can be used for example in a case where the operating communications connection 303 is a more versatile connection, like a full RS-232 or USB (Universal Serial Bus) connection, and the bus 304 is a simpler connection like an RS-485 or a reduced RS-232 connection. In such a case the hydraulics unit 206 should comprise enough own intelligence to make transformations between the protocols used in the different connections, so that e.g. sensor readings coming upstream from the electronics unit 302 eventually reach the control unit 207 in a form that the control unit 207 is capable of interpreting.

Fig. 4 illustrates an alternative possibility, in which the bus 401 does not go through the hydraulics unit 206 at all but connects the electronics part 302 of the pretensioning tool 201 directly to the control unit 207. In this alternative the operating communications connection 303 between the control unit 207 and the hydraulics unit 206 is dedicated solely to the communications between these two units, and is not used to convey any of the sensor readings from the pretensioning tool(s). This arrangement can be used for example in a case where the hydraulics unit 206 has very limited own intelligence, and is configured just to respond to commands from the control unit 207 by appropriately pumping and bleeding the hydraulic fluid to and from the hydraulics part 301 of the pretensioning tool.

Both fig. 3 and fig. 4 illustrate a database 306, to which the control unit 207 has access. Advantageous ways of utilizing the database 306 are described later in this description.

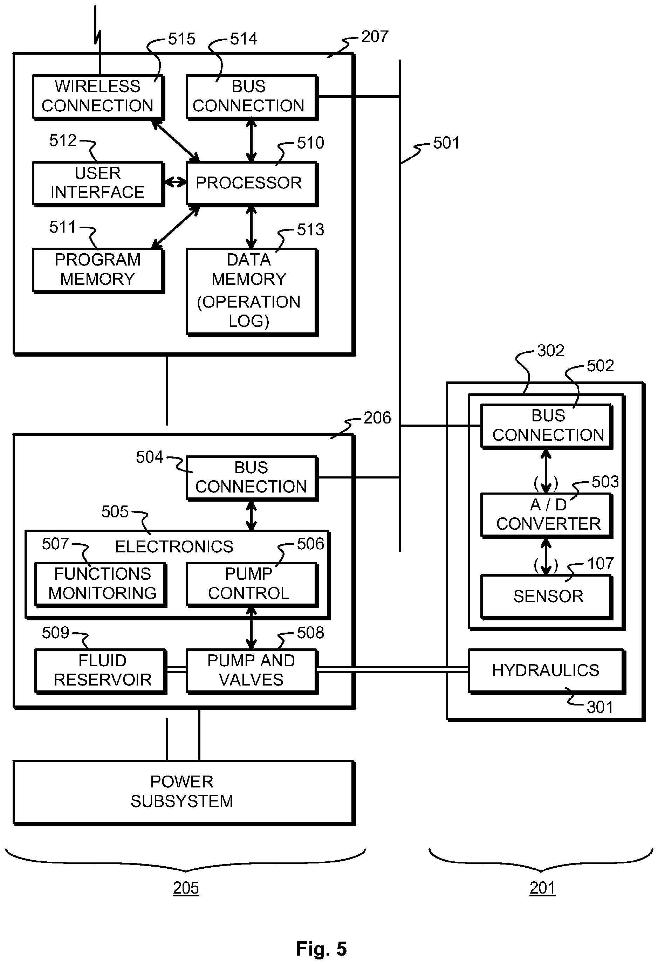

Fig. 5 is a slightly more detailed schematic illustration that shows the functional entities of a pretensioning system according to yet another embodiment of the invention. The left side of fig. 5 illustrates the central unit 205 and on the right is one exemplary pretensioning tool 201. In this case the same bus 501 is used to implement the operating communications connection between the control unit 207 and the hydraulics unit 206 as well as the bus to which the pretensioning tool 201 connects with its bus connection 502. Functional entities that belong to the electronics part 302 of the pretensioning tool 201 are the sensor 107, an analog to digital (A/D) converter 503 (if needed), and the bus connection 502, which includes an address circuit (not separately shown) configured to utilize an identifier of the sensor 107 in communications through the bus 501. In a simple case the communications within the electronics part 302 of the pretensioning tool 201 may be unidirectional in the upstream direction, which is illustrated in fig, 5 with the brackets around the downstream direction arrowheads.

The operating power requirements of the electronics part 302 of the pretensioning tool are typically so modest that they can be met with the power that can be delivered over the bus 501. If not, a separate operating power input can be built into the pretensioning tool 201.

The hydraulics unit 206 has a bus connection 504 of its own, providing a connection between the bus 501 and the electronics part 505 of the hydraulics unit 206. Examples of electronic functional entities shown in fig. 5 are a pump control entity 506 and an internal functions monitoring entity 507. Of these the former controls the hydraulic pump and valves 508 that utilize the hydraulic fluid stored in a reservoir 509 to provide the hydraulic pressure needed to operate the pretensioning tool(s).

The central functional entity of the control unit 207 is a processor 510, which is configured to execute programs stored in a program memory 511 and communicate with a human user through a user interface 512, which may comprise for example a touch-sensitive screen or separate display and keyboard parts as well as control keys. The processor 510 has a data memory 513 at its disposal for storing run-time data. A bus connection 514 provides the interface between the processor 510 and the bus 501. In the embodiment of fig. 5 the control unit 207 has also a further connection that is meant for communications with devices that are further away than the immediate components of the pretensioning system shown in fig. 5. This further connection is shown in the exemplary form of a wireless connection 515, but is could quite as well comprise a wired connection. A non-limiting example of a further-away device meant here is a factory database. Basically the control unit 207 could have connections to and from further-away devices also through the same bus 501 through which it communicates with the other parts of the pretensioning system, but in many cases it is more practical to dedicate the bus 501 solely to internal communications of the pretensioning system.

According to an aspect of the present invention, the central unit of a pretensioning system comprises and/or has access to an operation log, which is a collection of stored data that documents the use of individual pretensioning tools. The operation log may be located in the data memory 513, but additionally or alternatively it may be located in a further-away data storage, like in a factory database for example. Thus the database 306 illustrated in figs. 3 and 4 may represent a data storage internal to the pretensioning system, or an external data storage, or both. An example of how the operation log can be used is the monitoring of the executed operation cycles of individual pretensioning tools.

For this purpose the central unit of a pretensioning system is configured to store into the operation log an indication of use of each pretensioning tool on the basis of executed communications between the central unit and the pretensioning tool in question. During such communications the identifier, or bus address, of the sensor in the pretensioning tool is used to unambiguously identify the pretensioning tool. In other words, when a pretensioning tool equipped with a sensor executes an operating cycle under the control of the central unit, this operating cycle is documented in the operation log. In addition to logging the operating cycles of the pretensioning tools in the operating log, the (central unit of the) pretensioning system is configured to provide indications to its user about the logged number of operating cycles. For example, as a response to the logged number of operating cycles of a particular pretensioning tool reaching the predetermined limit, the central unit is configured to provide a particular indication to the user: that pretensioning tool cannot be operated safely any more before its scheduled maintenance has been performed.

Other functions which the central unit may be configured to execute include, but are not limited to, the following:
- responding to a detected connection of a pretensioning tool by checking, whether a pretensioning tool identified by said identifier of said sensor exists in a tools database available to the central unit,
- comparing a stored rating of an identified pretensioning tool to a predetermined operating parameter associated with the pretensioning of a particular bolt, and instructing the user to use said pretensioning tool to the pretensioning of said particular bolt only if it is found that said rating matches said predetermined operating parameter,
- checking, during ongoing pretensioning, whether a received signal that indicates proceeding pretensioning comes from a sensor, an identifier of which matches that of a pretensioning tool that the central unit instructed to be used.

In the last-mentioned case the central unit may be configured to abort the ongoing pretensioning as a response to a mismatch between the identifier of the sensor from which the signal was received and the identifier of the pretensioning tool that the central unit instructed to be used.

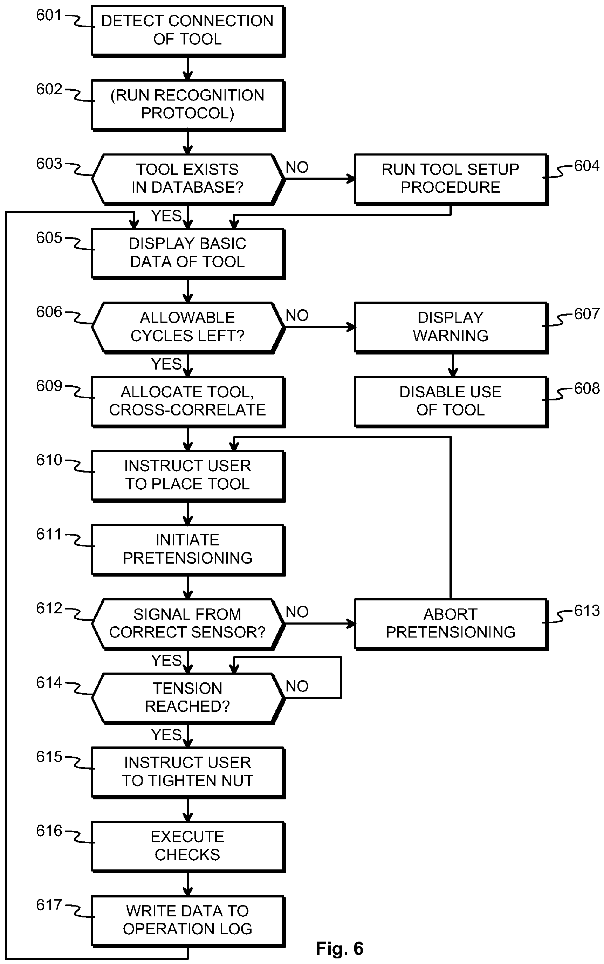

Examples of functions of the kind mentioned above are described in more detail with reference to fig. 6, which illustrates a method according to an embodiment of the invention. The method of fig. 6 may be implemented with a computer, by preparing and storing on a nonvolatile storage medium a set of machine-readable instructions that, when executed by a computer, cause the implementation of the method. Thus fig. 6 is also an illustration of a computer program product aspect of the invention. In the following description we assume that essentially all intelligence related to the execution of the method is in the control unit, so saying that the central unit does something is essentially equal to saying that the control unit does something. If communications between the control unit and the pretensioning tool go through the hydraulics unit like in fig. 3, the hydraulics unit is only assumed to convey messages, including making protocol conversions, if necessary.

At step 601 a pretensioning tool is connected to the central unit, which causes the control unit to detect the connection of the pretensioning tool. The detection may already include receiving at the control unit information about the bus address or other identifier of the sensor in the pretensioning tool, but in case it does not, there may be a separate step 602 for running a recognition protocol, during which the control unit becomes aware of the bus address or other identifier of the sensor. From this on the control unit uses the bus address or other identifier of the sensor as the identifier of the pretensioning tool, the connection of which was detected at step 601.

At step 603 the control unit checks, whether this pretensioning tool exists in the tools database available to the control unit has access, for example the factory database. If no pretensioning tool with this identifier exists yet in the database, the control unit runs a setup procedure at step 604, during which an entry is created in the database for this pretensioning tool. Creating the entry may involve entering basic data of the pretensioning tool, like its rating and any available information about operating cycles that the tool has already experienced.

Step 605 illustrates displaying basic data of an identified pretensioning tool to the user. The purpose of this step is to show to the user that the connected pretensioning tool has been recognized and is ready for use. This and/or other phase of the method comprises also the check illustrated at step 606, where the control unit compares the logged number of operating cycles of the pretensioning tool to a predetermined limit. In other words the control unit checks, whether the pretensioning tool has allowable operating cycles left. If not, a warning is displayed (i.e. an indication is provided) to the user at step 607. The control unit may also disable the further use of a pretensioning tool that has reached the maximum number of logged operating cycles, according to step 608. In practice this means that the control unit refuses to instruct the hydraulic pump to pump any hydraulic pressure to that pretensioning tool.

If the finding at step 606 was positive, the control unit allocates the connected pretensioning tool to the pretensioning of a bolt in the project that is being worked upon. For example, if the user is tightening the bolts of the big ends of connecting rods in an engine, the control unit allocates the pretensioning tool to the tightening of the next bolt to be tightened. The cross-correlation mentioned in step 609 means that the control unit checks, what are the ratings and possible other predetermined operating parameters associated with the pretensioning of the bolt in question, and compares a stored rating of the allocated pretensioning tool to at least one of the predetermined parameters. The method should comprise an exit from step 609 to account for the case in which the cross-correlation shows that the connected pretensioning tool is not suitable for the job.

Step 610 becomes actual as a response to a finding, according to which the rating of the pretensioning tool matches or is better than the predetermined operating parameter to which it was compared. At step 610 the control unit instructs the user to place the pretensioning tool in place. After receiving an acknowledgement that the tool is in place, the control unit initiates the pretensioning at step 611.

When the pretensioning has been initiated, the hydraulics unit begins to increase the hydraulic pressure that causes the hydraulic cylinder in the pretensioning tool to draw the bolt. Typically the hydraulic pressure is first increased to a basic value, which draws out slack, so that e.g. the measured movement of the gripper assumes a reliable zero value. The measurement of the movement is reset, after which the actual pretensioning of the bolt begins, so that after resetting the measured movement of the gripper or other measured increase in tension corresponds to an elastic extension of the bolt.

Step 612 in fig. 6 represents a check that the signal, which indicates the movement of the gripper or otherwise signifies that pretensioning is proceeding, comes from the correct sensor. Such a check has significance particularly if the pretensioning system has multiple pretensioning tools connected simultaneously to the central unit. Namely, when the control unit instructed the user to place the pretensioning tool at step 610, a human error could have occurred, with the result that the user placed the incorrect pretensioning tool. Alternatively a malfunctioning valve could have caused the hydraulic pressure to increase in an incorrect pretensioning tool. If the signal appears to come from a sensor, the bus address or other identifier of which does not match the identifier of the pretensioning tool that should be in use, the control unit aborts the current pretensioning according to step 613. The user may be prompted to clear out the situation, for example by returning to step 610 where an instruction to use the correct pretensioning tool is given.

If the pretensioning proceeds normally, the execution of the method in fig. 6 circulates the loop in step 614 until the signal from the sensor shows that the appropriate tension has been reached. The user is instructed to tighten the nut at step 615, after which the final checks are made at step 616. These may involve for example returning the pressure to the basic value and checking that the tension does not relax more than a small allowable value. If there was dirt in the threads or under the nut, decreasing the pressure causes a significant decrease in measured tension, which means that the procedure must be repeated and the error source removed. Thus there should be a possible return from step 616 to some step of corrective action, although one is not shown in fig. 6 in order to maintain graphical clarity.

At step 617 the control unit stores into the operation log an indication of the executed use of the pretensioning tool. In producing the indication the pretensioning tool is identified with the bus address or other identifier of the sensor, which was also utilized in communicating the sensor readings, so we may say that the storing of an indication takes place on the basis of executed communications between the central unit and the pretensioning tool, during which communications said identifier of said sensor was used. If there are more bolts to be pretensioned in the current project, and if the ratings associated with these show that they can be pretensioned with the same pretensioning tool, the execution of the method of fig. 6 may return e.g. to step 606.

Modifications to the exemplary embodiments described above are possible without departing from the scope of protection defined by the appended claims. For example, above we have assumed that each pretensioning tool only has one chamber, and is thus capable of only pretensioning one bolt at a time. Multi-chamber pretensioning tools, which are applicable to pretensioning two or more bolts without moving the pretensioning tool in between, can be built and connected to the central unit in a similar fashion. Each chamber of a multi-chamber pretensioning tool must have a sensor of its own, in order to know exactly the tension of each bolt that was pretensioned. Thus each sensor should also have an unambiguous bus address or other identifier, which is used in the communications over the bus that conveys the measurement results from the sensors to the central unit. By using these identifiers the chambers of a multi-chamber pretensioning tool can be handled in the operation log as if they were individual pretensioning tools.

## Claims

1. A pretensioning system for pretensioning bolts, comprising at least one pretensioning tool (201, 202, 203, 204) for bolts, which pretensioning tool comprises
- a sensor (107) for measuring tension created during operation,
- a bus connection (108, 502) for electronic communication with said sensor (107), and
- an address circuit (109) configured to utilize an identifier of said sensor when communicating through said bus connection (108, 502), **characterized in that** the pretensioning system further comprises a central unit (205), wherein:
- the central unit (205) comprises and/or has access to an operation log, and
- the central unit (205) is configured to store into said operation log an indication of use of said pretensioning tool (201, 202, 203, 204) on the basis of executed communications between the central unit (205) and said pretensioning tool (201, 202, 203, 204), during which communications said identifier of said sensor (107) was used.

2. A pretensioning system according to claim 1, wherein said address circuit (109) constitutes an integral entity with said sensor (107).

3. A pretensioning system according to claim 1, wherein said address circuit is located separately from said sensor in said pretensioning tool.

4. A pretensioning system according to claim 3, comprising an electronic control unit, of which said address circuit is a part.

5. A pretensioning system according to any of the preceding claims, wherein said bus connection (108, 502) comprises at least one of the following: an RS-485 connection, a CAN connection, a reduced RS-232 connection.

6. A pretensioning system according to any of the preceding claims, wherein said sensor (107) is a magnetic sensor configured to measure movements of magnetic material comprised in a gripper (105), which gripper (105) is configured to grip a free end of a bolt (102) to be pretensioned.

7. A pretensioning system according to claim 1, wherein:
- the central unit (205) is configured to log operating cycles of said pretensioning tool (201, 202, 203, 204) in said operation log, and
- the central unit (205) is configured to provide an indication to its user as a response to the logged number of operating cycles of said pretensioning tool (201, 202, 203, 204) reaching a predetermined limit.

8. A pretensioning system according to claim 1 or 7, wherein:
- the central unit (205) is configured to respond to a detected connection (601) of the pretensioning tool by checking (603), whether a pretensioning tool identified by said identifier of said sensor exists in a tools database available to the central unit.

9. A pretensioning system according to any of claims 1 to 8, wherein:
- the central unit is configured to compare (609) a stored rating of said pretensioning tool to a predetermined operating parameter associated with the pretensioning of a particular bolt, and
- the central unit is configured to instruct (610) its user to use said pretensioning tool to the pretensioning of said particular bolt as a response to a finding, according to which said rating matches or is better than said predetermined operating parameter.

10. A pretensioning system according to any of claims 1 to 9, wherein:
- the central unit is configured to check (612), during ongoing pretensioning, whether a received signal that indicates proceeding pretensioning comes from a sensor, an identifier of which matches that of a pretensioning tool that the central unit instructed to be used, and
- the central unit is configured to abort (613) the ongoing pretensioning as a response to a mismatch between the identifier of the sensor from which the signal was received and the identifier of the pretensioning tool that the central unit instructed to be used.

11. A method for pretensioning bolts with a pretensioning system according to claim 1, **characterized in that** the method comprises:
- identifying (601, 602) a pretensioning tool by a bus address of a tension sensor incorporated in said pretensioning tool,
- initiating (611) pretensioning with the identified pretensioning tool, and
- logging (617) the use of said pretensioning tool to an operation log where said pretensioning tool is identified by said bus address.

12. A method according to claim 11, comprising:
- checking (606) a logged number of operating cycles of said pretensioning tool, and
- providing an indication to a user as a response to the logged number of operating cycles of said pretensioning tool reaching a predetermined limit.

13. A method according to claim 11 or 12, comprising:
- detecting a connection (601) of the pretensioning tool to a central unit of a pretensioning system,
- checking (603), whether a pretensioning tool identified by said identifier of said sensor exists in a tools database available to the central unit, and
- as a response to a finding that said pretensioning tool does not exist in the tools database, running (604) a tool setup routine to create an entry of said pretensioning tool in said database.

14. A method according to any of claims 12 to 13, comprising:
- comparing (609) a stored rating of said pretensioning tool to a predetermined operating parameter associated with the pretensioning of a particular bolt, and
- instructing (610) a user to use said pretensioning tool to the pretensioning of said particular bolt as a response to a finding, according to which said rating matches or is better than said predetermined operating parameter.

15. A computer program product stored on a nonvolatile storage medium, **characterized in that** the computer program product comprises machine-readable instructions that, when executed by a computer, cause the implementation of a method comprising:
- identifying (601, 602) a pretensioning tool by a bus address of a tension sensor incorporated in said pretensioning tool,
- initiating (611) pretensioning with the identified pretensioning tool, and
- logging (617) the use of said pretensioning tool to an operation log where said pretensioning tool is identified by said bus address.

## Patentansprüche

1. Vorspannungssystem für Vorspannungsschrauben, umfassend mindestens ein Vorspannungswerkzeug (201, 202, 203, 204) für Schrauben, wobei das Vorspannungswerkzeug umfasst
- ein Sensor (107) zum Messen der Spannung, die im Betrieb erzeugt wurde,
- eine Busverbindung (108, 502) für elektronische Kommunikation mit dem Sensor (107), und
- eine Adressschaltung (109), konfiguriert zum Verwenden einer Kennung des Sensors bei der Kommunikation durch die Busverbindung (108, 502), **dadurch gekennzeichnet, dass** das Vorspannungssystem weiter eine zentrale Einheit (205) umfasst, wobei:
- die zentrale Einheit (205) ein Betriebslog umfasst und/oder Zugriff darauf hat, und
- die zentrale Einheit (205) konfiguriert ist, in dem Betriebslog eine Anzeige der Verwendung des Vorspannungswerkzeugs (201, 202, 203, 204) auf der Grundlage der ausgeführten Kommunikation zwischen der zentralen Einheit (205) und dem Vorspannungswerkzeug (201, 202, 203, 204) zu speichern, wobei während dieser Kommunikation die Kennung des Sensors (107) verwendet wurde.

2. Vorspannungssystem nach Anspruch 1, wobei die Adressschaltung (109) eine integrale Entität mit dem Sensor (107) darstellt.

3. Vorspannungssystem nach Anspruch 1, wobei die Adressschaltung getrennt von dem Sensor in dem Vorspannungswerkzeug platziert ist.

4. Vorspannungssystem nach Anspruch 3, umfassend eine elektronische Steuereinheit, deren Teil die Adressschaltung ist.

5. Vorspannungssystem nach einem der vorhergehenden Ansprüche, wobei die Busverbindung (108, 502) mindestens eines der folgenden umfasst: eine RS-485-Verbindung, eine CAN-Verbindung, eine reduzierte RS-232-Verbindung.

6. Vorspannungssystem nach einem der vorhergehenden Ansprüche, wobei der Sensor (107) ein Magnetsensor ist, der konfiguriert ist, Bewegungen von magnetischem Material zu messen, das in einem Greifer (105) enthalten ist, wobei der Greifer (105) konfiguriert ist, ein freies Ende einer Schraube (102) zu greifen, die vorgespannt werden soll.

7. Vorspannungssystem nach Anspruch 1, wobei:
- die zentrale Einheit (205) konfiguriert ist, Betriebszyklen des Vorspannwerkzeugs (201, 202, 203, 204) in dem Betriebslog aufzuzeichnen, und
- die zentrale Einheit (205) konfiguriert ist, eine Anzeige für ihren Benutzer in Reaktion darauf bereitzustellen, dass die aufgezeichnete Anzahl der Betriebszyklen des Vorspannungswerkzeugs (201, 202, 203, 204) einen vorgegebenen Grenzwert erreicht.

8. Vorspannungssystem nach Anspruch 1 oder 7, wobei:
- die zentrale Einheit (205) konfiguriert ist, auf eine erkannte Verbindung (601) des Vorspannungswerkzeugs zu reagieren, indem geprüft (603) wird, ob ein Vorspannungswerkzeug, das durch die Kennung des Sensors identifiziert wird, in einer Werkzeugdatenbank existiert, die für die zentrale Einheit zur Verfügung steht.

9. Vorspannungssystem nach einem der Ansprüche Anspruch 1 bis 8, wobei:
- die zentrale Einheit konfiguriert ist, ein gespeichertes Rating des Vorspannungswerkzeugs mit einem vorgegebenen Betriebsparameter zu vergleichen (609), der mit der Vorspannung einer bestimmten Schraube assoziiert ist, und
- die zentrale Einheit konfiguriert ist, ihren Benutzer anzuweisen (610), das Vorspannungswerkzeug zu verwenden, um die jeweilige Schraube in Reaktion auf eine Feststellung hin vorzuspannen, dass das Rating zu dem vorgegebenen Betriebsparameter passt oder besser als dieser ist.

10. Vorspannungssystem nach einem der Ansprüche Anspruch 1 bis 9, wobei:
- die zentrale Einheit konfiguriert ist, während der Vorspannung beim fortlaufenden Vorspannen zu prüfen (612), ob ein empfangenes Signal, das anzeigt, dass die zunehmende Vorspannung von einem Sensor kommt, dessen Kennung zu der eines Vorspannungswerkzeugs passt, das die zentrale Einheit zu verwenden angewiesen wird, und
- die zentrale Einheit konfiguriert ist, das fortlaufende Vorspannen in Reaktion auf eine Abweichung zwischen der Kennung des Sensors, von dem das Signal empfangen wurde, und der Kennung des Vorspannungswerkzeugs, das die zentrale Einheit zu verwenden angewiesen wird, abzubrechen (613).

11. Verfahren für Vorspannungsschrauben mit einem Vorspannungssystem nach Anspruch 1, **dadurch gekennzeichnet, dass** das Verfahren umfasst:
- Identifizieren (601, 602) eines Vorspannungswerkzeugs durch eine Busadresse eines Spannungssensors, der in das Vorspannungswerkzeug eingebaut ist,
- Einleiten (611) einer Vorspannung mit dem identifizierten Vorspannungswerkzeug, und
- Aufzeichnen (617) der Verwendung des Vorspannungswerkzeugs in einem Betriebslog, in dem das Vorspannungswerkzeug durch die Busadresse identifiziert wird.

12. Verfahren nach Anspruch 11, umfassend:
- Prüfen (606) einer aufgezeichneten Anzahl von Betriebszyklen des Vorspannungswerkzeugs, und
- Bereitstellen einer Anzeige für einen Benutzer in Reaktion darauf, dass die aufgezeichnete Anzahl der Betriebszyklen des Vorspannungswerkzeugs einen vorgegebenen Grenzwert erreicht.

13. Verfahren nach Anspruch 11 oder 12, umfassend:
- Erkennen einer Verbindung (601) des Vorspannungswerkzeugs mit einer zentralen Einheit eines Vorspannungssystems,
- Prüfen (603), ob ein Vorspannungswerkzeug, das durch die Kennung des Sensors identifiziert wurde, in einer Werkzeugdatenbank existiert, die für die zentrale Einheit zur Verfügung steht, und
- in Reaktion auf die Feststellung, dass das Vorspannungswerkzeug in der Werkzeugdatenbank nicht existiert, Ausführen (604) eines Werkzeugsetups, um einen Eintrag des Vorspannungswerkzeugs in der Datenbank zu erstellen.

14. Verfahren nach einem der Ansprüche 12 bis 13, umfassend:
- Vergleichen (609) eines gespeicherten Ratings des Vorspannungswerkzeugs mit einem vorgegebenen Betriebsparameter, der mit der Vorspannung einer bestimmten Schraube assoziiert ist, und
- Anweisen (610) eines Benutzers, das Vorspannungswerkzeug zu verwenden, um die jeweilige Schraube in Reaktion auf eine Feststellung vorzuspannen, dass das Rating zu dem vorgegebenen Betriebsparameter passt oder besser als dieser ist.

15. Computerprogrammprodukt, das auf einem nichtflüchtigen Speichermedium gespeichert ist, **dadurch gekennzeichnet, dass** das Computerprogramm maschinenlesbare Anweisungen umfasst, die bei Ausführung auf einem Computer die Umsetzung eines Verfahrens auslösen, das umfasst:
- Identifizieren (601, 602) eines Vorspannungswerkzeugs durch eine Busadresse eines Spannungssensors, der in das Vorspannungswerkzeug eingebaut ist,
- Einleiten (611) einer Vorspannung mit dem identifizierten Vorspannungswerkzeug, und
- Aufzeichnen (617) der Verwendung des Vorspannungswerkzeugs in einem Betriebslog, in dem das Vorspannungswerkzeug durch die Busadresse identifiziert wird.

## Revendications

1. Système de précontrainte pour la précontrainte de boulons, comprenant au moins un outil de précontrainte (201, 202, 203, 204) pour boulons, lequel outil de précontrainte comprend :
- un capteur (107) pour mesurer une tension créée pendant le fonctionnement,
- une connexion de bus (108, 502) pour la communication électronique avec ledit capteur (107), et
- un circuit d'adresse (109) configuré pour utiliser un identificateur dudit capteur lors de la communication via ladite connexion de bus (108, 502), **caractérisé en ce que** le système de précontrainte comprend en outre une unité centrale (205), dans lequel :
- l'unité centrale (205) comprend un journal des opérations et/ou a accès à celui-ci, et
- l'unité centrale (205) est configurée pour stocker, dans ledit journal des opérations, une indication d'utilisation dudit outil de précontrainte (201, 202, 203, 204) sur la base de communications exécutées entre l'unité centrale (205) et ledit outil de précontrainte (201, 202, 203, 204) pendant lesquelles communications ledit identificateur dudit capteur (107) était utilisé.

2. Système de précontrainte selon la revendication 1, dans lequel ledit circuit d'adresse (109) constitue une entité intégrale avec ledit capteur (107).

3. Système de précontrainte selon la revendication 1, dans lequel ledit circuit d'adresse est situé séparément dudit capteur dans ledit outil de précontrainte.

4. Système de précontrainte selon la revendication 3, comprenant une unité de commande électronique dont ledit circuit d'adresse fait partie.

5. Système de précontrainte selon l'une quelconque des revendications précédentes, dans lequel ladite connexion de bus (108, 502) comprend au moins l'une des suivantes : une connexion RS-485, une connexion CAN, une connexion RS-232 réduite.

6. Système de précontrainte selon l'une quelconque des revendications précédentes, dans lequel ledit capteur (107) est un capteur magnétique configuré pour mesurer des mouvements d'un matériau magnétique compris dans une pince (105), laquelle pince (105) est configurée pour saisir une extrémité libre d'un boulon (102) à soumettre à une précontrainte.

7. Système de précontrainte selon la revendication 1, dans lequel :
- l'unité centrale (205) est configurée pour enregistrer des cycles de fonctionnement dudit outil de précontrainte (201, 202, 203, 204) dans ledit journal des opérations, et
- l'unité centrale (205) est configurée pour fournir une indication à son utilisateur en tant que réponse au nombre enregistré de cycles de fonctionnement dudit outil de précontrainte (201, 202, 203, 204) atteignant une limite prédéterminée.

8. Système de précontrainte selon la revendication 1 ou 7, dans lequel :
- l'unité centrale (205) est configurée pour répondre à une connexion détectée (601) de l'outil de précontrainte en vérifiant (603) si un outil de précontrainte identifié par ledit identificateur dudit capteur existe dans une base de données d'outils disponible pour l'unité centrale.

9. Système de précontrainte selon l'une quelconque des revendications 1 à 8, dans lequel :
- l'unité centrale est configurée pour comparer (609) une évaluation enregistrée dudit outil de précontrainte avec un paramètre de fonctionnement prédéterminé associé à la précontrainte d'un boulon particulier, et
- l'unité centrale est configurée pour instruire (610) son utilisateur d'utiliser ledit outil de précontrainte pour la précontrainte dudit boulon particulier en tant que réponse à une constatation selon laquelle ladite évaluation correspond audit paramètre de fonctionnement prédéterminé ou est meilleure que celui-ci.

10. Système de précontrainte selon l'une quelconque des revendications 1 à 9, dans lequel :
- l'unité centrale est configurée pour vérifier (612), pendant une précontrainte en cours, si un signal reçu qui indique la poursuite d'une précontrainte provient d'un capteur dont l'identificateur correspond à celui d'un outil de précontrainte pour lequel l'unité centrale a donné l'instruction de l'utiliser, et
- l'unité centrale est configurée pour interrompre (613) la précontrainte en cours en tant que réponse à une discordance entre l'identificateur du capteur dont le signal a été reçu et l'identificateur de l'outil de précontrainte pour lequel l'unité centrale a donné l'instruction de l'utiliser.

11. Procédé pour la précontrainte de boulons avec un système de précontrainte selon la revendication 1, **caractérisé en ce que** le procédé comprend :
- l'identification (601, 602) d'un outil de précontrainte grâce à une adresse de bus d'un capteur de tension intégré dans ledit outil de précontrainte,
- le lancement (611) d'une précontrainte avec l'outil de précontrainte identifié, et
- l'enregistrement (617) de l'utilisation dudit outil de précontrainte dans un journal des opérations où ledit outil de précontrainte est identifié par ladite adresse de bus.

12. Procédé selon la revendication 11, comprenant :
- la vérification (606) d'un nombre enregistré de cycles de fonctionnement dudit outil de précontrainte, et
- la fourniture d'une indication à un utilisateur en tant que réponse au nombre enregistré de cycles de fonctionnement dudit outil de précontrainte atteignant une limite prédéterminée.

13. Procédé selon la revendication 11 ou 12, comprenant :
- la détection d'une connexion (601) de l'outil de précontrainte à une unité centrale d'un système de précontrainte,
- la vérification (603) si un outil de précontrainte identifié par ledit identificateur dudit capteur existe dans une base de données d'outils disponible pour l'unité centrale, et
- en tant que réponse à une constatation en ce que ledit outil de précontrainte n'existe pas dans la base de données d'outils, l'exécution (604) d'une routine de configuration d'outil pour créer une entrée dudit outil de précontrainte dans ladite base de données.

14. Procédé selon l'une quelconque des revendications 12 à 13, comprenant :
- la comparaison (609) d'une évaluation enregistrée dudit outil de précontrainte avec un paramètre de fonctionnement prédéterminé associé à la précontrainte d'un boulon particulier, et
- l'instruction (610) donnée à un utilisateur d'utiliser ledit outil de précontrainte pour la précontrainte dudit boulon particulier en tant que réponse à une constatation selon laquelle ladite évaluation correspond audit paramètre de fonctionnement prédéterminé ou est meilleure que celui-ci.

15. Produit de programme informatique stocké sur un support de stockage non volatile, **caractérisé en ce que** le produit de programme informatique comprend des instructions lisibles par machine lesquelles, lorsque exécutées par un ordinateur, produisent l'implémentation d'un procédé comprenant :
- l'identification (601, 602) d'un outil de précontrainte par une adresse de bus d'un capteur de tension intégré dans ledit outil de précontrainte,
- le lancement (611) d'une précontrainte avec l'outil de précontrainte identifié, et
- l'enregistrement (617) de l'utilisation dudit outil de précontrainte dans un journal des opérations où ledit outil de précontrainte est identifié par ladite adresse de bus.
